# EUROPÄISCHE PATENTSCHRIFT

(11) **EP 2 417 380 B1**
(45) Veröffentlichungstag und Bekanntmachung des Hinweises auf die Patenterteilung: **26.06.2013**
(21) Anmeldenummer: 10713439.7
(22) Anmeldetag: 31.03.2010
(51) Int. Cl.: F16H 61/08, F16H 61/04, F16H 61/686

(54) **VERFAHREN ZUM BETREIBEN EINER GETRIEBEEINRICHTUNG MIT MEHREREN REIB- UND FORMSCHLÜSSIGEN SCHALTELEMENTEN**
METHOD FOR OPERATING A TRANSMISSION DEVICE WITH A PLURALITY OF FRICTION-LOCKING AND POSITIVE-LOCKING SHIFTING ELEMENTS
PROCÉDÉ POUR FAIRE FONCTIONNER UN DISPOSITIF DE BOÎTE DE VITESSES COMPORTANT PLUSIEURS ÉLÉMENTS DE PASSAGE À FRICTION ET COMPLÉMENTARITÉ DE FORME

(30) Priorität: 06.04.2009 DE 102009002203
(43) Veröffentlichungstag der Anmeldung: 15.02.2012
(73) Patentinhaber: ZF Friedrichshafen AG, 88038 Friedrichshafen (DE)
(72) Erfinder: ARNOLD, Joerg, 88090 Immenstadt (DE); HERBETH, Valentine, 88045 Friedrichshafen (DE); MIHATSCH, Georg, 88131 Lindau (DE)
(86) Internationale Anmeldenummer: PCT/EP2010/054313
(87) Internationale Veröffentlichungsnummer: WO 2010/115808

(56) Entgegenhaltungen:
- EP-A2- 1 344 965
- DE-A1- 10 244 023
- DE-A1-102004 014 081
- DE-A1-102007 059 472
- US-A- 5 938 563
- US-A1- 2008 066 567

## Beschreibung

Die Erfindung betrifft ein Verfahren zum Betreiben einer Getriebeeinrichtung mit mehreren reib- und formschlüssigen Schaltelementen gemäß der im Oberbegriff des Patentanspruches 1 näher definierten Art.

Bei aus der Praxis bekannten Automatgetrieben, die neben reibschlüssigen Schaltelementen auch formschlüssige Schaltelemente zur Darstellung verschiedener Übersetzungen aufweisen, wird der Schaltbefehl zum Schließen einer formschlüssigen Verbindung mittels Kraftaufbringung von einer Getriebesteuerung bzw. einer in die Getriebesteuerung implementierten Getriebesoftware mit einem gewissen zeitlichen Vorhalt vor dem Erreichen des Synchronpunktes des formschlüssigen Schaltelementes ausgelöst.

Der zeitliche Vorhalt wird insbesondere bei hydraulisch betätigten formschlüssigen Schaltelementen von Automatgetrieben unter anderem in erheblichem Umfang von der Betriebstemperatur des Getriebeöls beeinflusst.

Der jeweils betriebszustandsabhängig benötigte zeitliche Vorhalt bzw. der zwischen dem Zeitpunkt der Schaltanforderung und dem Zuschaltzeitpunkt des formschlüssigen Schaltelementes liegende Zeitraum wird vorzugsweise empirisch ermittelt und im Betrieb eines Automatgetriebes in Abhängigkeit des Gradienten einer Getriebeeingangsdrehzahl oder einer hierzu äquivalenten Drehzahlgröße bestimmt.

Mit dieser Vorgehensweise soll gewährleistet werden, dass die Umsetzung des Schaltbefehls verzögernde Ereignisse, wie Signallaufzeiten, hydraulische Verzögerungen, Zurücklegen der Wegstrecke zum Schließen der formschlüssigen Verbindung und dergleichen, dahingehend berücksichtigt werden, dass eine Differenzdrehzahl zwischen den Schaltelementhälften des zu schließenden formschlüssigen Schaltelementes zum Schaltzeitpunkt innerhalb eines vordefinierten Differenzdrehzahlfensters liegt, wobei von dem Differenzdrehzahlfenster umfasste Differenzdrehzahlen jeweils eine Voraussetzung für eine komfortable Zuschaltung des formschlüssigen Schaltelementes darstellen.

Aus der DE 197 56 637 A1 ist eine Schalteinrichtung zum Verbinden von mit unterschiedlichen Drehzahlen rotierenden Bauteilen eines Getriebes und wenigstens einer Schaltgruppe bekannt, wobei die Schalteinrichtung von einem Steuerfluid betätigt wird. Für jede Schaltgruppe des Getriebes wird eine Einheit vorgesehen, in der Ventile, Schaltzylinderkolben und Schaltelemente zusammengefasst sind. Als auslösende Ventile werden gepulste 2/2-Wegeventile verwendet. Über eine Wegmesseinrichtung wird jeweils eine aktuelle Position des Kolbens in Bezug auf den Schaltzylinder eines Schaltelementes ermittelt. Beim Einschalten von Zahnrädern in eine Drehmoment übertragende Verbindung wird eine Anpassung von Schaltkraft und Schaltzeit vorgenommen, um variable Synchronzeiten und schnellere Schaltzeiten darstellen zu können.

Bei den vorbeschriebenen Getriebeeinrichtungen besteht jedoch die Problematik, dass spontane Änderungen des Gradienten der Getriebeeingangsdrehzahl bzw. der hierzu äquivalenten Drehzahlgröße nach dem Zeitpunkt der Schaltanforderung für die Zuschaltung eines formschlüssigen Schaltelementes, beispielsweise aufgrund einer starken Änderung der Gaspedalstellung eines Fahrzeuges oder aufgrund einer starken fahrerseitigen Abbremsung des Fahrzeuges, nicht in gewünschtem Umfang berücksichtigbar sind.

Dies resultiert aus der Tatsache, dass der zum Zeitpunkt der Schaltanforderung vorliegende Gradient nicht mehr dem aktuellen Gradienten entspricht und der zum Zeitpunkt der Schaltanforderung über den ausgewählten Zeitraum bestimmte Zuschaltzeitpunkt des formschlüssigen Schaltelementes nicht mehr mit dem Zeitpunkt übereinstimmt, zu dem die Differenzdrehzahl des formschlüssigen Schaltelementes innerhalb des für eine komfortable Zuschaltung des formschlüssigen Schaltelementes erforderlichen Differenzdrehzahlfensters liegt. Wird die Zuschaltung des formschlüssigen Schaltelementes dann außerhalb des gewünschten Differenzdrehzahlfensters durchgeführt, treten einen Fahrkomfort beeinträchtigende Schaltgeräusche und für einen Fahrer in Form von Rucken ebenfalls wahrnehmbare Drehmomentreaktionen im Antriebsstrang auf.

Die gattungsbildende DE 10244023 A1 zeigt ein solches Verfahren zum Betreiben einer Getriebeeinrichtung mit mehreren reib- und formschlüssigen Schaltelementen zum Darstellen verschiedener Übersetzungen.

Der vorliegenden Erfindung liegt daher die Aufgabe zugrunde, ein Verfahren zum Betreiben einer Getriebeeinrichtung mit mehreren reib- und formschlüssigen Schaltelementen zum Darstellen verschiedener Übersetzungen zur Verfügung zu stellen, mit dem einen Fahrkomfort beeinträchtigende Schaltungen, an welchen jeweils wenigstens ein formschlüssiges Schaltelement beteiligt ist, auf einfache Art und Weise vermieden werden.

Erfindungsgemäß wird diese Aufgabe mit einem Verfahren mit den Merkmalen des Patentanspruches 1 gelöst.

Bei dem Verfahren zum Betreiben einer Getriebeeinrichtung mit mehreren reib- und formschlüssigen Schaltelementen zum Darstellen verschiedener Übersetzungen ergeht eine Schaltanforderung zum Schließen eines formschlüssigen Schaltelementes einen betriebszustandsabhängigen Zeitraum vor einem Zuschaltzeitpunkt des formschlüssigen Schaltelementes. Zu dem Zuschaltzeitpunkt ist eine Differenzdrehzahl zwischen den Schaltelementhälften des formschlüssigen Schaltelementes in einem für den Zuschaltvorgang erforderlichen Differenzdrehzahlfenster angeordnet.

Erfindungsgemäß wird zum Zeitpunkt der Schaltanforderung ein Gradient der Getriebeeingangsdrehzahl oder einer hierzu äquivalenten Drehzahlgröße ermittelt und anschließend der aktuelle Gradient überwacht sowie dem Gradienten zum Schaltanforderungszeitpunkt gegenüber gestellt, wobei der Zeitraum bei Ermittlung einer betragsmäßigen Abweichung größer als ein Schwellwert verändert wird.

Das bedeutet, dass bei Vorliegen einer vordefinierten Abweichung zwischen dem Gradienten zum Schaltanforderungszeitpunkt und einem aktuellen Gradienten der Getriebeeingangsdrehzahl oder der hierzu äquivalenten Drehzahlgröße Maßnahmen ergriffen werden, um den voraus berechneten bzw. betriebszustandsabhängig ausgewählten Zeitraum zwischen der Generierung der Schaltanforderung und dem Zuschaltzeitpunkt des formschlüssigen Schaltelementes bzw. dem Einspuren des formschlüssigen Schaltelementes durch eine Korrektur des Gradienten einzuhalten oder die Einlegegeschwindigkeit des formschlüssigen Schaltelementes zu variieren und das formschlüssige Schaltelement mit einer innerhalb des Differenzdrehzahlfensters liegenden Differenzdrehzahl auf einfache Art und Weise mit hohem Schaltkomfort schließen zu können.

Bei Vorliegen einer positiven Abweichung zwischen dem aktuellen Gradienten und dem Gradienten zum Zeitpunkt der Schaltanforderung für eine Rückschaltung wird der Zeitraum bei einer vorteilhaften Variante des erfindungsgemäßen Verfahrens verkürzt, wobei die Differenzdrehzahl zwischen den Schaltelementhälften des formschlüssigen Schaltelementes nach Ablauf des verkürzten Zeitraumes wenigstens annähernd innerhalb des Differenzdrehzahlfensters liegt. Damit wird auf einfache Art und Weise gewährleistet, dass die angeforderte Schaltung mit hohem Komfort durchführbar ist.

Bei einer negativen Abweichung zwischen dem aktuellen Gradienten und dem Gradienten zum Zeitpunkt der Schaltanforderung für eine Rückschaltung wird der Zeitraum bei einer Variante des Verfahrens nach der Erfindung verlängert, wobei die Differenzdrehzahl zwischen den Schaltelementhälften des formschlüssigen Schaltelementes nach Ablauf des verlängerten Zeitraumes wenigstens annähernd innerhalb des Differenzdrehzahlfensters liegt und eine Schaltung mit hohem Komfort gewährleistet ist.

Der Zeitraum zwischen dem Zeitpunkt der Schaltanforderung für eine Rückschaltung und dem Zuschaltzeitpunkt des formschlüssigen Schaltelementes ist durch Variieren der Betätigungskraft des formschlüssigen Schaltelementes betriebszustandsabhängig anpassbar, um eine Schaltung mit hohem Komfort durchführen zu können.

Soll der Zeitraum anforderungsgemäß verkürzt werden, wird die Betätigungskraft des formschlüssigen Schaltelementes bei einer Variante des erfindungsgemäßen Verfahrens auf einfache Art und Weiser erhöht.

Ist der Zeitraum zur Gewährleistung einer durch einen hohen Komfort gekennzeichneten Schaltung zu verlängern, wird die Betätigungskraft des formschlüssigen Schaltelementes bei einer weiteren Variante des Verfahrens verringert.

Die Betätigungskraft wird bei einer elektrischen Betätigung des formschlüssigen Schaltelementes durch Verändern des Ansteuerstromes variiert, während die Betätigungskraft bei einer pneumatischen oder hydraulischen Betätigung des formschlüssigen Schaltelementes durch Verändern des Betätigungsdruckes variierbar ist.

Alternativ hierzu besteht auch die Möglichkeit, die Betätigungskraft bei einer hydraulischen Betätigung des formschlüssigen Schaltelementes durch Anlegen eines dem Betätigungsdruck entgegenwirkenden Gegendruckes zu variieren.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
- Fig. 1: ein Räderschema einer Getriebeeinrichtung mit mehreren reib- und formschlüssigen Schaltelementen zum Darstellen verschiedener Übersetzungen;
- Fig. 2: ein Schaltschema der Getriebeeinrichtung gemäß Fig. 1; und
- Fig. 3: mehrere alternative Verläufe verschiedener Betriebszustandsparameter der Getriebeeinrichtung gemäß Fig. 1 während einer Rückschaltung.

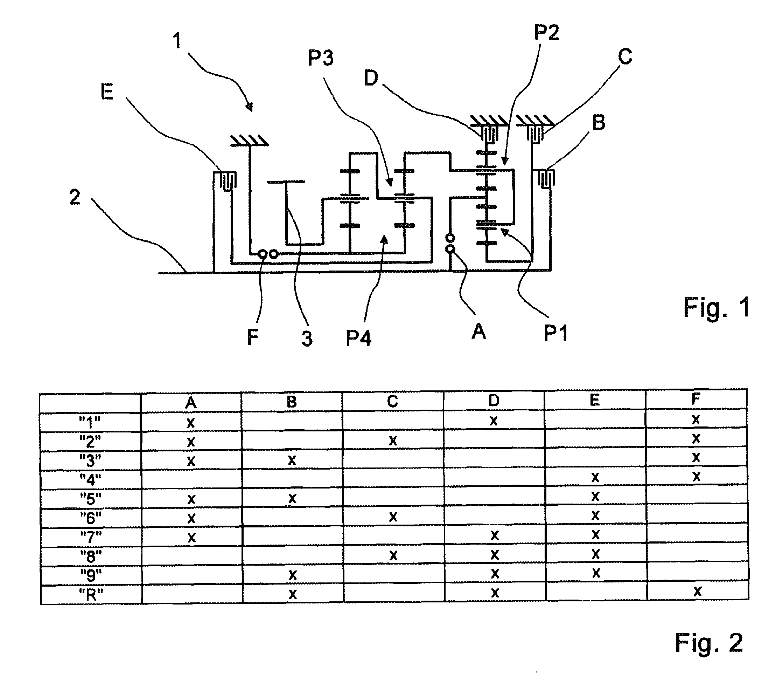

Fig. 1 zeigt ein Räderschema einer Getriebeeinrichtung 1 bzw. eines Mehrstufengetriebes, welches grundsätzlich aus der unveröffentlichten deutschen Patentanmeldung DE 10 2008 000 429.4 der Anmelderin bekannt ist. Die Getriebeeinrichtung 1 umfasst eine Antriebswelle 2 und eine Abtriebswelle 3, welche in in einem Fahrzeug montierten Zustand mit einem Abtrieb des Fahrzeuges verbunden ist, während die Antriebswelle 2 mit einer Antriebsmaschine wirkverbunden ist.

Darüber hinaus umfasst die Getriebeeinrichtung 1 vier Planetenradsätze P1 bis P4, wobei der erste und der zweite Planetenradsatz P1, P2, die vorzugsweise als Minus-Planetenradsätze ausgebildet sind, einen schaltbaren Vorschaltradsatz bilden, während der dritte und der vierte Planetenradsatz P3, P4 den Hauptradsatz darstellen. Zusätzlich umfasst die Getriebeeinrichtung 1 sechs Schaltelemente A bis F, wovon die Schaltelemente B, D und E als Bremsen und die Schaltelemente A, C und F als Schaltkupplungen ausgeführt sind.

Mit den Schaltelementen A bis F ist über die in Fig. 2 näher dargestellte Schaltlogik ein selektives Schalten von neun Vorwärtsgängen "1" bis "9" und einem Rückwärtsgang "R" realisierbar, wobei bis auf die vierte Übersetzungsstufe "4" zur Darstellung einer Übersetzung in der Getriebeeinrichtung 1 bzw. zum Herstellen eines Kraftflusses in der Getriebeeinrichtung 1 jeweils gleichzeitig drei Schaltelemente in einen geschlossenen Betriebszustand zu führen bzw. zu halten sind.

Die Schaltelemente A und F sind vorliegend als formschlüssige Schaltelemente ausgebildet, um im Betrieb der Getriebeeinrichtung 1 im Vergleich zu Getriebeeinrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Differenzdrehzahlbandes bzw. Differenzdrehzahlfensters um die Synchrondrehzahl herum aus einem geöffneten Betriebszustand in einen geschlossenen Betriebszustand mit einem jeweils gewünschten Komfort überführbar sind, wird die Synchronisierung eines zuzuschaltenden formschlüssigen Schaltelementes ohne zusätzliche konstruktive Ausführungen mittels des nachfolgend näher beschriebenen erfindungsgemäßen Verfahrens unterstützt bzw. gewährleistet.

Die nachbeschriebenen Varianten des erfindungsgemäßen Verfahrens sind besonders bei Rückschaltungen vorteilhaft, bei welchen jeweils ein reibschlüssiges Schaltelement abgeschaltet und ein formschlüssiges Schaltelement in einen Kraftfluss der Getriebeeinrichtung 1 zugeschaltet wird, wobei die formschlüssigen Schaltelemente A und F der betrachteten Getriebeeinrichtung 1 als Klauenkupplungen ausgeführt sein können, welche mit oder ohne zusätzliche Synchronisierung ausgebildet sind.

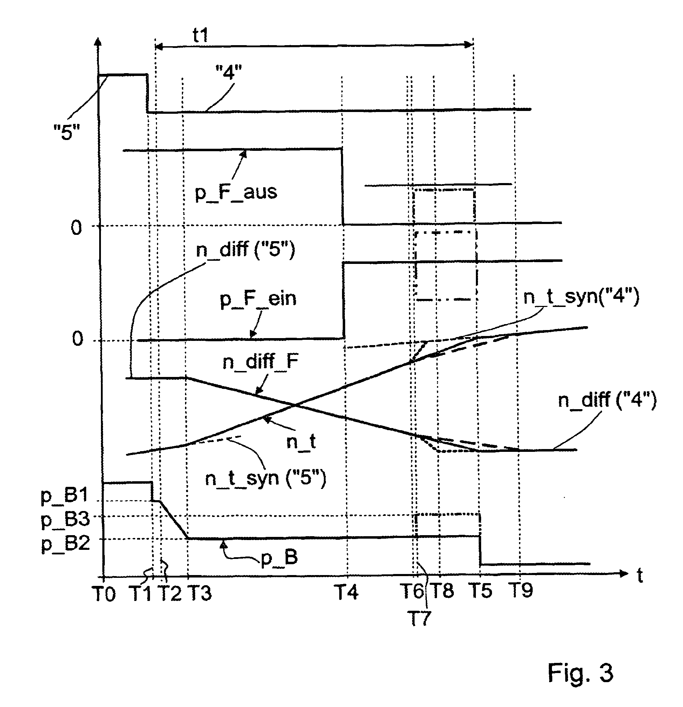

Nachfolgend wird die Wirkungsweise verschiedener Varianten des erfindungsgemäßen Verfahrens anhand der in Fig. 3 über der Zeit t näher dargestellten Verläufe mehrerer Betriebszustandsparameter der Getriebeeinrichtung 1 gemäß Fig. 1 näher erläutert.

Bei den den in Fig. 3 dargestellten Verläufen der Betriebszustandsparameter der Getriebeeinrichtung 1 jeweils zugrunde liegenden Betriebszustandsverläufen ist zu einem Zeitpunkt T0 in der Getriebeeinrichtung 1 jeweils die fünfte Übersetzungsstufe "5" eingelegt. Zur Darstellung der fünften Übersetzungsstufe "5" werden die Schaltelemente A, B und E in geschlossenem Zustand gehalten, während die Schaltelemente C, D und F geöffnet sind.

Zu einem Zeitpunkt T1 wird eine Schaltanforderung für eine Rückschaltung ausgehend von der fünften Übersetzungsstufe "5" in die vierte Übersetzungsstufe "4" generiert, weshalb ein Schaltverlauf SV vom Niveau der fünften Übersetzungsstufe "5" sprungartig auf das Niveau der vierten Übersetzungsstufe "4" absinkt.

Zur Durchführung der angeforderten Rückschaltung von der fünften Übersetzungsstufe "5" in die vierte Übersetzungsstufe "4" ist das reibschlüssige Schaltelement B zu öffnen bzw. aus dem Kraftfluss der Getriebeeinrichtung 1 abzuschalten und das formschlüssige Schaltelement F in den Kraftfluss der Getriebeeinrichtung 1 zuzuschalten bzw. vom geöffneten Betriebszustand in seinen geschlossenen Betriebszustand zu überführen. Aus diesem Grund wird das reibschlüssige Schaltelement B bis zum Zeitpunkt T1 mit einem dem Schließdruckwert, zu dem das Schaltelement B vollständig geschlossen ist, entsprechenden Betätigungsdruck p_B beaufschlagt, während das formschlüssige Schaltelement F mit einem Druckwert des Betätigungsdruckes p_F_ein beaufschlagt wird, der im Wesentlichen gleich 0 ist.

Eine Getriebeeingangsdrehzahl bzw. eine hierzu äquivalente Turbinendrehzahl n_t entspricht zum Zeitpunkt T1 einer Synchrondrehzahl n_t_syn("5") der fünften Übersetzungsstufe "5", womit sich im Bereich zwischen den Schaltelementhälften des formschlüssigen Schaltelementes F eine Differenzdrehzahl n_diff_F auf dem Drehzahlniveau n_diff_F("5") einstellt.

Zum Zeitpunkt T1, zu dem die Schaltanforderung für die Rückschaltung von der fünften Übersetzungsstufe "5" in die vierte Übersetzungsstufe "4" ergeht, wird der Betätigungsdruck p_B vom Schließdruckniveau sprungartig auf einen ersten Zwischendruckwert p_B1 abgesenkt und bis zu einem Zeitpunkt T2 im Wesentlichen auf diesem Druckniveau belassen. Anschließend wird der Betätigungsdruck p_B des reibschlüssigen Schaltelementes B auf einen zweiten Zwischendruckwert abgesenkt, zu welchem das Schaltelement B in einen Schlupfbetrieb übergeht.

Das Absenken der Übertragungsfähigkeit des reibschlüssigen Schaltelementes B führt dazu, dass die Turbinendrehzahl n_t zum Zeitpunkt T3, zu dem das Schaltelement B mit dem zweiten Zwischendruckwert p_B2 beaufschlagt wird, ausgehend vom Drehzahlniveau der Synchrondrehzahl n_t_syn("5") der Turbinendrehzahl n_t in Richtung der Synchrondrehzahl n_t_syn("4") der vierten Übersetzungsstufe "4" ansteigt. Dies bewirkt wiederum, dass die Differenzdrehzahl n_diff_F des formschlüssigen Schaltelementes F ab dem Zeitpunkt T3 in Richtung der Synchrondrehzahl n_diff_F("4") absinkt, welche gleich 0 ist. Zu einem Zeitpunkt T4 wird der Betätigungsdruck p_F_ein des formschlüssigen Schaltelementes F auf ein Schließdruckniveau angehoben und anschließend auf diesem Druckniveau belassen.

Zum Zeitpunkt T1 wird der Gradient der Turbinendrehzahl n_t ermittelt. Gleichzeitig wird eine Überwachung des aktuellen Gradienten der Turbinendrehzahl n_t gestartet und dem Gradienten zum Schaltanforderungszeitpunkt T1 permanent gegenübergestellt. Bei Ermittlung einer betragsmäßigen Abweichung größer als ein Schwellwert wird jeweils eine der nachfolgend beschriebenen Maßnahmen ergriffen, um einen zum Schaltanforderungszeitpunkt T1 betriebzustandsabhängig ermittelten Zeitraum t1 in einer einen hohen Schaltkomfort gewährleistenden Art und Weise zu verändern oder eine Abweichung zwischen dem Gradienten der Turbinendrehzahl n_t zum Schaltanforderungszeitpunkt T1 und einem aktuellen Betriebszeitpunkt unterhalb des vordefinierten Schwellwertes zu führen.

Der Zeitraum t1 erstreckt sich zwischen dem Zuschaltzeitpunkt T1 und einem zum Zeitpunkt T1 in Abhängigkeit des Gradienten der Turbinendrehzahl n_t und von eine Umsetzung der Schaltanforderung verzögernden Ereignissen, wie einer Signallaufzeit, hydraulischen Verzögerungen, einem Zurücklegen der Wegstrecke zum Schließen des formschlüssigen Schaltelementes und dergleichen, betriebszustandsabhängig ermittelten Schaltzeitpunkt T5 des formschlüssigen Schaltelementes F, wobei der Zeitpunkt T5 bei dem vorliegend hydraulisch betätigten formschlüssigen Schaltelement F stark in Abhängigkeit der Temperatur des Getriebeöls variiert. Dabei wird der Zeitraum t1 mittels eines die Getriebeeinrichtung 1 abbildenden Modells rechnerisch bestimmt oder aus einem empirisch ermittelten Kennfeld ausgelesen.

Bei einer ersten Variante des den Verläufen der Betriebszustandsparameter der Getriebeeinrichtung 1 gemäß Fig. 1 zugrunde liegenden Betriebszustandsverlaufes steigt die Turbinendrehzahl n_t zu einem Zeitpunkt T6 beispielsweise aufgrund einer spontanen Änderung der fahrerseitigen Fahrpedalbetätigung mit einem steileren Gradienten in Richtung der Synchrondrehzahl n_t_syn("4") an als zum Zeitpunkt T1. Zu einem Zeitpunkt T7 ist die Abweichung zwischen dem Gradienten zum Schaltanforderungszeitpunkt T1 und dem aktuellen Gradienten der Turbinendrehzahl n_t größer als der vordefinierte Schwellwert. Die Einlegegeschwindigkeit des formschlüssigen Schaltelementes F wird durch Anheben des Betätigungsdruckes p_F_ein ab dem Zeitpunkt T7 entlang der ein-Punkt-strichlierten Linie temporär erhöht und das Schaltelement wird zu einem Zeitpunkt T8 geschlossen, der zeitlich vor dem vordefinierten Schließzeitpunkt T5 des formschlüssigen Schaltelementes F liegt. Dabei entspricht die Differenzdrehzahl n_diff_F des formschlüssigen Schaltelementes zum Zeitpunkt T8 wenigstens annähernd der Synchrondrehzahl n_diff_F("4"), die in dem vordefinierten Differenzdrehzahlfensters liegt, innerhalb dem die angeforderte Schaltung mit hoher Schaltqualität durchführbar ist.

Alternativ hierzu ist es bei einer weiteren Variante des Verfahrens nach der Erfindung vorgesehen, dass zum Zeitpunkt T7, zu dem eine positive Abweichung zwischen dem aktuellen Gradienten und dem zum Schaltanforderungszeitpunkt T1 ermittelten Gradienten der Turbinendrehzahl n_t vorliegt, die Übertragungsfähigkeit des abzuschaltenden reibschlüssigen Schaltelementes B entlang der vier-Punkt-strichlierten Linie temporär vom zweiten Zwischendruckwert p_B2 auf einen höheren dritten Zwischendruckwert p_B3 angehoben wird. Dies führt dazu, dass der aktuelle Gradient der Turbinendrehzahl n_t reduziert wird und die Differenzdrehzahl n_diff_F des formschlüssigen Schaltelementes F die Synchrondrehzahl n_diff_F("4") zum Schaltanforderungszeitpunkt T1 bestimmten Schaltzeitpunkt T5 erreicht, wobei der Betätigungsdruck p_B zum Zeitpunkt T5, zu dem die Rückschaltung abgeschlossen ist, im Wesentlichen auf 0 abgesenkt wird.

Wird zum Zeitpunkt T6 eine negative Abweichung zwischen dem aktuellen Gradienten der Turbinendrehzahl n_t und dem zum Schaltanforderungszeitpunkt T1 bestimmten Gradienten der Turbinendrehzahl n_t ermittelt, die beispielsweise durch eine fahrerseitige Betätigung der Fahrzeugbremse bei teilweise geschlossenem reibschlüssigen Schaltelement B ausgelöst wird oder weil der Fahrer spontan vom Gas geht, wird eine Einlegegeschwindigkeit des formschlüssigen Schaltelementes F durch das in Fig. 3 durch die zwei-Punktstrichlierte Linie graphisch dargestellte temporäre Absenken des Betätigungsdruckes p_F_ein des formschlüssigen Schaltelementes F zwischen den Zeitpunkten T7 und T5 reduziert und das formschlüssige Schaltelement F erst zu einem Zeitpunkt T9 geschlossen, zu dem die Turbinendrehzahl n_t die Synchrondrehzahl n_t_syn("4") der vierten Übersetzungsstufe "4" erreicht. Dies führt dazu, dass der zum Schaltanforderungszeitpunkt T1 bestimmte Zeitraum t1 durch Variieren der Betätigungskraft des formschlüssigen Schaltelementes F betriebszustandsabhängig angepasst bzw. verlängert wird, um die angeforderte Schaltung mit der gewünschten und vorzugsweise immer gleich guten Schaltqualität durchführen zu können.

Ist das formschlüssige Schaltelement F mit einem sogenannten Doppelkolben ausgebildet, der im Bereich einer ersten Wirkfläche mit dem Betätigungsdruck p_F_ein in Schließrichtung des formschlüssigen Schaltelementes F beaufschlagbar ist und im Bereich einer zweiten Wirkfläche mit einem in Öffnungsrichtung des formschlüssigen Schaltelementes F wirkenden Gegendruck p_F_aus beaufschlagbar ist, wird die Betätigungskraft des formschlüssigen Schaltelementes F in Schließrichtung durch temporäres Anheben des Gegendruckes p_F_aus des formschlüssigen Schaltelementes F entlang der drei-Punkt-strichlierten Linie zwischen den Zeitpunkten T7 und T5 reduziert und das formschlüssige Schaltelement F in gleichem Umfang wie bei der vorbeschriebenen temporären Absenkung des Betätigungsdruckes p_F_ein des formschlüssigen Schaltelementes F erst zum Zeitpunkt T9 vollständig geschlossen.

Bei der letztbeschriebenen Variante des erfindungsgemäßen Verfahrens wird das formschlüssige Schaltelement zwischen den Zeitpunkten T0 und T4 mit dem Gegendruck p_F_aus auf dem Öffnungsdruckniveau des formschlüssigen Schaltelementes F beaufschlagt, während der in Schließrichtung wirkende Betätigungsdruck p_F_ein im Wesentlichen gleich 0 ist. Zum Zeitpunkt T4 wird der Gegendruck p_F_aus vom Öffnungsdruckniveau im Wesentlichen auf 0 abgesenkt, während der Betätigungsdruck p_F_ein des formschlüssigen Schaltelementes F von 0 auf das Schließdruckniveau des formschlüssigen Schaltelementes F sprungartig angehoben wird.

Zwischen den Zeitpunkten T7 und T5 wird der Betätigungsdruck p_F_ein des formschlüssigen Schaltelementes F auf dem Schließdruckniveau belassen, während der Gegendruck p_F_aus des formschlüssigen Schaltelementes in diesem Zeitfenster gemäß der drei-Punkt-strichlierten Linie auf ein Zwischendruckniveau angehoben und zum Zeitpunkt T5 im Wesentlichen wieder auf 0 abgesenkt wird, um den Zeitraum t1 in vorbeschriebenem Umfang bis zum Zeitpunkt T9 zu verlängern und die angeforderte Rückschaltung mit einer hohen Schaltqualität durchführen zu können.

Die jeweils in Fig. 3 durch die durchgezogenen Linien dargestellten Verläufe der Betriebszustandsparameter der Getriebeeinrichtung 1 stellen sich während eines Betriebszustandsverlaufes der Getriebeeinrichtung 1 ein, während dem bei einer angeforderten Rückschaltung von der fünften Übersetzungsstufe "5" in die vierte Übersetzungsstufe "4" keine betragsmäßige Abweichung zwischen dem aktuellen Gradienten der Turbinendrehzahl n_t und der zum Schaltanforderungszeitpunkt T1 ermittelten Gradienten der Turbinendrehzahl n_t größer als der vordefinierte Schwellwert ermittelt wird. Die strichtpunktierten Verläufe der Betriebsparameter p_F_ein, p_F_aus und p_B stellen sich jeweils bei der Durchführung der vorbeschriebenen Varianten des erfindungsgemäßen Verfahrens ein, wenn eine betragsmäßige Abweichung zwischen dem aktuellen Gradienten der Turbinendrehzahl n_t und dem zum Schaltanforderungszeitpunkt T1 ermittelten Gradienten der Turbinendrehzahl n_t ermittelt wird. Ziel ist es jeweils, die angeforderte Rückschaltung immer mit der gleich hohen Schaltqualität durchzuführen.

Dabei wird der zum Schaltanforderungszeitpunkt T1 ermittelte Zeitraum t1 verkürzt, verlängert oder auf dem festgelegten Wert belassen, um die gewünschte Schaltqualität in jedem Fall gewährleisten zu können.

In Abhängigkeit des jeweils vorliegenden Anwendungsfalles besteht auch die Möglichkeit, die vorbeschriebenen Maßnahmen zur Erreichung einer gewünschten Schaltqualität, d. h. das Variieren der Betätigungskraft des formschlüssigen Schaltelementes F oder das Anheben der Übertragungsfähigkeit des abzuschaltenden reibschlüssigen Schaltelementes B in geeigneter Art und Weise gleichzeitig und aufeinander abgestimmt durchzuführen, um die jeweils gewünschte Schaltqualität zu erreichen.

### Bezugszeichen

| | |
|---|---|
| 1 | Getriebeeinrichtung |
| 2 | Antriebswelle |
| 3 | Abtriebswelle |
| "1" bis "9" | Übersetzung für Vorwärtsfahrt |
| A bis F | Schaltelement |
| n_diff_F | Differenzdrehzahl des formschlüssigen Schaltelementes F |
| n_diff_F("5") | Differenzdrehzahl des formschlüssigen Schaltelementes F |
| n_diff_F("4") | Synchrondrehzahl des formschlüssigen Schaltelementes F |
| n_t | Turbinendrehzahl |
| n_t_syn("5") | Synchrondrehzahl der Turbinendrehzahl |
| n_t_syn("4") | Synchrondrehzahl der Turbinendrehzahl |
| p_B | Betätigungsdruck des reibschlüssigen Schaltelementes B |
| p_B1 | erster Zwischendruckwert |
| p_B2 | zweiter Zwischendruckwert |
| p_B3 | dritter Zwischendruckwert |
| p_F_aus | Gegendruck |
| p_F_ein | Betätigungsdruck |
| P1 bis P4 | Planetenradsatz |
| SV | Schaltverlauf |
| T0 bis T9 | diskreter Zeitpunkt |
| t | Zeit |
| t1 | Zeitraum |

## Patentansprüche

1. Verfahren zum Betreiben einer Getriebeeinrichtung (1) mit mehreren reib- und formschlüssigen Schaltelementen (A bis F) zum Darstellen verschiedener Übersetzungen ("1" bis "R"), wobei eine Schaltanforderung zum Schließen eines formschlüssigen Schaltelementes (F) einen betriebszustandsabhängigen Zeitraum (t1) vor einem Zuschaltzeitpunkt (T5, T8; T9) des formschlüssigen Schaltelementes (F) ergeht, und wobei zu dem Zuschaltzeitpunkt (T5, T8; T9) eine Differenzdrehzahl (n_diff_F) zwischen den Schaltelementhälften des formschlüssigen Schaltelementes (F) in einem für den Zuschaltvorgang erforderlichen Differenzdrehzahlfenster angeordnet ist, **dadurch gekennzeichnet, dass** zum Zeitpunkt (T1) der Schaltanforderung ein Gradient der Getriebeeingangsdrehzahl oder einer hierzu äquivalenten Drehzahlgröße (n_t) ermittelt und anschließend der aktuelle Gradient überwacht sowie dem Gradienten zum Schaltanforderungszeitpunkt (T1) gegenübergestellt wird, wobei der Zeitraum (t1) bei Ermittlung einer betragsmäßigen Abweichung größer als ein Schwellwert verändert wird.

2. Verfahren nach Anspruch 1, **dadurch gekennzeichnet, dass** bei Vorliegen einer positiven Abweichung zwischen dem aktuellen Gradienten und dem Gradienten zum Zeitpunkt (T1) der Schaltanforderung für eine Rückschaltung der Zeitraum (t1) verkürzt wird, wobei die Differenzdrehzahl (n_diff_F) zwischen den Schaltelementhälften des formschlüssigen Schaltelementes (F) nach Ablauf des verkürzten Zeitraumes (t1) wenigstens annähernd innerhalb des Differenzdrehzahlfensters liegt.

3. Verfahren nach Anspruch 1 oder 2, **dadurch gekennzeichnet, dass** bei einer negativen Abweichung zwischen dem aktuellen Gradienten und dem Gradienten zum Zeitpunkt (T1) der Schaltanforderung für eine Rückschaltung der Zeitraum (t1) verlängert wird, wobei die Differenzdrehzahl (n_diff_F) zwischen den Schaltelementhälften des formschlüssigen Schaltelementes (F) nach Ablauf des verlängerten Zeitraumes (t1) wenigstens annähernd innerhalb des Differenzdrehzahlfensters liegt.

4. Verfahren nach einem der Ansprüche 1 bis 3, **dadurch gekennzeichnet, dass** der Zeitraum (t1) zwischen dem Zeitpunkt (T1) der Schaltanforderung für eine Rückschaltung und dem Zuschaltzeitpunkt (T5; T8; T9) des formschlüssigen Schaltelementes (F) durch Variieren einer Betätigungskraft des formschlüssigen Schaltelementes (F) betriebszustandsabhängig angepasst wird.

5. Verfahren nach Anspruch 4, **dadurch gekennzeichnet, dass** die Betätigungskraft des formschlüssigen Schaltelementes (F) zu einer Verkürzung des Zeitraumes (t1) erhöht wird.

6. Verfahren nach Anspruch 4 oder 5, **dadurch gekennzeichnet, dass** die Betätigungskraft des formschlüssigen Schaltelementes (F) zu einer Verlängerung des Zeitraumes (t1) verringert wird.

7. Verfahren nach einem der Ansprüche 4 bis 6, **dadurch gekennzeichnet, dass** die Betätigungskraft bei einer elektrischen Betätigung des formschlüssigen Schaltelementes durch Verändern des Ansteuerstromes variiert wird.

8. Verfahren nach einem der Ansprüche 4 bis 6, **dadurch gekennzeichnet, dass** die Betätigungskraft bei einer pneumatischen oder hydraulischen Betätigung des formschlüssigen Schaltelementes (F) durch Verändern des Betätigungsdruckes (p_F_ein) des formschlüssigen Schaltelementes (F) variiert wird.

9. Verfahren nach einem der Ansprüche 4 bis 6, **dadurch gekennzeichnet, dass** die Betätigungskraft bei einer hydraulischen Betätigung des formschlüssigen Schaltelementes (F) durch Anlegen eines dem Betätigungsdruck (p_F_ein) des formschlüssigen Schaltelementes (F) entgegenwirkenden Gegendruckes (p_F_aus) variiert wird.

10. Verfahren nach einem der Ansprüche 4 bis 9, **dadurch gekennzeichnet, dass** das Variieren der Betätigungskraft des formschlüssigen Schaltelementes (F) und ein Anheben einer Übertragungsfähigkeit eines abzuschaltenden reibschlüssigen Schaltelementes (B) gleichzeitig und aufeinander abgestimmt durchgeführt werden.

## Claims

1. Method for operating a transmission device (1) having a plurality of friction-locking and positive-locking shifting elements (A to F) for forming different transmission ratios ("1" to "R"), wherein a shifting request to close a positive-locking shifting element (F) occurs for an operating-state-dependent time period (t1) before an activation time (T5, T8; T9) of the positive-locking shifting element (F), and wherein at the activation time (T5, T8; T9) a differential rotational speed (n_diff_F) between the shifting element halves of the positive-locking shifting element (F) is arranged in a differential rotational speed window which is necessary for the activation process, **characterized in that** at the time (T1) of the shifting request a gradient of the transmission input rotational speed or a rotational speed variable (n_t) which is equivalent thereto is determined and subsequently the current gradient is monitored and compared with the gradient at time (T1) of the shifting request, wherein the time period (t1) is changed when an absolute-value deviation which is greater than a threshold value is determined.

2. Method according to Claim 1, **characterized in that** when a positive deviation is present between the current gradient and the gradient at the time (T1) of the shifting request for shifting down, the time period (t1) is shortened, wherein the differential rotational speed (n_diff_F) between the shifting element halves of the positive-locking shifting element (F) after the expiry of the shortened time period (t1) is at least approximately within the differential rotational speed window.

3. Method according to Claim 1 or 2, **characterized in that** when there is a negative deviation between the current gradient and the gradient at the time (T1) of the shifting request for shifting down, the time period (t1) is lengthened, wherein the differential rotational speed (n_diff_F) between the shifting element halves of the positive-locking shifting element (F) after the expiry of the lengthened time period (t1) is at least approximately within the differential rotational speed window.

4. Method according to one of Claims 1 to 3, **characterized in that** the time period (t1) between the time (T1) of the shifting request for shifting down and the activation time (T5; T8; T9) of the positive-locking shifting element (F) is adapted by varying an activation force of the positive-locking shifting element (F) as a function of the operating state.

5. Method according to Claim 4, **characterized in that** the activation force of the positive-locking shifting element (F) is increased with the effect of shortening the time period (t1).

6. Method according to Claim 4 or 5, **characterized in that** the activation force of the positive-locking shifting element (F) is reduced with the effect of lengthening the time period (t1).

7. Method according to one of Claims 4 to 6, **characterized in that** when the positive-locking shifting element is activated electrically the activation force is varied by changing the actuation current.

8. Method according to one of Claims 4 to 6, **characterized in that** when the positive-locking shifting element (F) is activated pneumatically or hydraulically the activation force is varied by changing the activation pressure (p_F_ein) of the positive-locking shifting element (F).

9. Method according to one of Claims 4 to 6, **characterized in that** when the positive-locking shifting element (f) is activated hydraulically the activation force is varied by applying a counterpressure (p_F_aus) which counteracts the activation pressure (p_F_ein) of the positive-locking shifting element (F).

10. Method according to one of Claims 4 to 9, **characterized in that** the varying of the activation force of the positive-locking shifting element (F) and increasing of a transmission capability of a friction-locking shifting element (B) which is to be switched off are carried out simultaneously and in a manner matched to one another.

## Revendications

1. Procédé pour faire fonctionner un dispositif de boîte de vitesses (1) comprenant plusieurs éléments de changement de vitesse à friction et complémentarité de forme (A à F) pour réaliser différents changements de rapports ("1" à "R"), une demande de changement de vitesse pour fermer un élément de changement de vitesse (F) à complémentarité de forme se produisant durant un intervalle de temps (t1) dépendant de l'état de fonctionnement avant un instant d'enclenchement (T5, T8 ; T9) de l'élément de changement de vitesse (F) à complémentarité de forme, et à l'instant d'enclenchement (T5, T8 ; T9), une différence de régime (n_diff_F) entre les moitiés d'élément de changement de vitesse de l'élément de changement de vitesse (F) à complémentarité de forme se trouvant dans une fenêtre de différence de régime requise pour l'opération d'enclenchement, **caractérisé en ce qu'**à l'instant (T1) de la demande de changement de vitesse, un gradient de régime d'entrée de la boîte de vitesses ou une grandeur de régime équivalente (n_t) est déterminé et ensuite le gradient actuel est surveillé et est comparé au gradient à l'instant de la demande de changement de vitesse (T1), l'intervalle de temps (t1) étant modifié si l'on détecte un écart en valeur absolue supérieur à une valeur de seuil.

2. Procédé selon la revendication 1, **caractérisé en ce qu'**en présence d'un écart positif entre le gradient actuel et le gradient à l'instant (T1) de la demande de changement de vitesse pour un rétrogradage, l'intervalle de temps (t1) est raccourci, la différence de régime (n_diff_F) entre les moitiés d'élément de changement de vitesse de l'élément de changement de vitesse (F) à complémentarité de forme se trouvant au moins approximativement à l'intérieur de la fenêtre de différence de régime après l'écoulement de l'intervalle de temps raccourci (t1).

3. Procédé selon la revendication 1 ou 2, **caractérisé en ce que** dans le cas d'un écart négatif entre le gradient actuel et le gradient à l'instant (T1) de la demande de changement de vitesse pour un rétrogradage, l'intervalle de temps (t1) est rallongé, la différence de régime (n_diff_F) entre les moitiés d'élément de changement de vitesse de l'élément de changement de vitesse (F) à complémentarité de forme se trouvant au moins approximativement à l'intérieur de la fenêtre de différence de régime après l'écoulement de l'intervalle de temps rallongé (t1).

4. Procédé selon l'une quelconque des revendications 1 à 3, **caractérisé en ce que** l'intervalle de temps (t1) entre l'instant (T1) de la demande de changement de vitesse pour un rétrogradage et l'instant d'enclenchement (T5, T8 ; T9) de l'élément de changement de vitesse (F) à complémentarité de forme est adapté en fonction de l'état de fonctionnement en faisant varier une force d'actionnement de l'élément de changement de vitesse (F) à complémentarité de forme.

5. Procédé selon la revendication 4, **caractérisé en ce que** la force d'actionnement de l'élément de changement de vitesse (F) à complémentarité de forme est augmentée pour raccourcir l'intervalle de temps (t1).

6. Procédé selon la revendication 4 ou 5, **caractérisé en ce que** la force d'actionnement de l'élément de changement de vitesse (F) à complémentarité de forme est réduite pour rallonger l'intervalle de temps (t1).

7. Procédé selon l'une quelconque des revendications 4 à 6, **caractérisé en ce que** la force d'actionnement est modifiée dans le cas d'un actionnement électrique de l'élément de changement de vitesse à complémentarité de forme par variation du courant de commande.

8. Procédé selon l'une quelconque des revendications 4 à 6, **caractérisé en ce que** la force d'actionnement est modifiée dans le cas d'un actionnement pneumatique ou hydraulique de l'élément de changement de vitesse (F) à complémentarité de forme par variation de la pression d'actionnement (p_F_ein) de l'élément de changement de vitesse (F) à complémentarité de forme.

9. Procédé selon l'une quelconque des revendications 4 à 6, **caractérisé en ce que** la force d'actionnement est modifiée dans le cas d'un actionnement hydraulique de l'élément de changement de vitesse (F) à complémentarité de forme par application d'une contre-pression (p_F_aus) agissant à l'encontre de la pression d'actionnement (p_F_ein) de l'élément de changement de vitesse (F) à complémentarité de forme.

10. Procédé selon l'une quelconque des revendications 4 à 9, **caractérisé en ce que** la variation de la force d'actionnement de l'élément de changement de vitesse (F) à complémentarité de forme et une augmentation de la capacité de transfert d'un élément de changement de vitesse (B) à friction à déconnecter sont effectuées de manière simultanée et adaptée l'une à l'autre.
